# EUROPÄISCHE PATENTSCHRIFT

(11) **EP 1 648 747 B1**
(45) Veröffentlichungstag und Bekanntmachung des Hinweises auf die Patenterteilung: **04.03.2009**
(21) Anmeldenummer: 04762366.5
(22) Anmeldetag: 10.07.2004
(51) Int. Cl.: B60R 21/01, B60T 7/12

(54) **VORRICHTUNG ZUR EINLEITUNG UND DURCHF HRUNG EINER PL TZ LICHEN FAHRZEUGVERZ GERUNG**
DEVICE FOR INITIATING AND EXECUTING A SUDDEN VEHICLE DECELERATION
DISPOSITIF PERMETTANT A UN VEHICULE D'INITIER ET D'EFFECTUER UN FREINAGE BRUSQUE

(30) Priorität: 22.07.2003 DE 10333462
(43) Veröffentlichungstag der Anmeldung: 26.04.2006
(73) Patentinhaber: ROBERT BOSCH GMBH, 70442 Stuttgart (DE)
(72) Erfinder: LUCAS, Bernhard, 74354 Besigheim (DE); HEINEBRODT, Martin, 70176 Stuttgart (DE); STAEMPFLE, Martin, 71701 Schwieberdingen (DE); BRANZ, Wolfgang, 70180 Stuttgart (DE)
(86) Internationale Anmeldenummer: PCT/DE2004/001506
(87) Internationale Veröffentlichungsnummer: WO 2005/009799

(56) Entgegenhaltungen:
- DE-A- 19 601 110
- DE-A- 19 919 451
- US-A- 3 886 745

## Beschreibung

Die vorliegende Erfindung betrifft eine Vorrichtung zur Einleitung und Durchführung einer plötzlichen Fahrzeugverzögerung, insbesondere für Notbremssituationen, wobei die Verzögerung durch die Explosion mindestens eines Treibsatzes oder Sprengsatzes, der auf mindestens eine Komponente der Verzögerungseinrichtungen wirkt, eingeleitet wird. Durch die Explosion des Treibsatzes oder Sprengsatzes wird ein, die Bremsflüssigkeit mit einem Druck beaufschlagender Kolben bewegt oder eine Arretierungseinrichtung zerstört, so dass die gespeicherte Energie einer energiespeichernden Einrichtung freigegeben werden kann. Die Auslösung dieser Vorrichtung geschieht selbsttätig mittels einer Umfeldsensorik, wenn aufgrund der Objekte im Umfeld des Fahrzeugs und deren Bewegung das Vorliegen einer unausweichbaren Kollision detektiert wird.

### Stand der Technik

Aus der WO 03/006291 A1 ist ein Verfahren und eine Vorrichtung zum Auslösen und Durchführen einer Verzögerung eines Fahrzeugs zur Vermeidung einer Kollision bekannt. Hierbei werden mittels einer Vorrichtung zur Abstands- und Geschwindigkeitsregelung des Fahrzeugs Objekte im Sensorerfassungsbereich erkannt und für jedes erkannte Objekt Messgrößen ermittelt, die erkannten Objekte aufgrund der ermittelten, zugehörigen Messgrößen verschiedenen Objektklassen zugeordnet und aufgrund der Zuordnung der erkannten Objekte zur jeweiligen Klasse die Bewegungstrajektorien der Objekte prädiziert. Aus diesen prädizierten Bewegungstrajektorien der Objekte und der zugehörigen, erkannten Objektklassen wird weiterhin ein Kollisionsrisiko ermittelt und bei Vorliegen eines vorgebbaren Kollisionsrisikos werden die Verzögerungseinrichtungen des Fahrzeugs in Abhängigkeit des Grades des Kollisionsrisikos angesteuert.

Aus der DE Aus der DE 199 19 451 A1 ist ein Unterdruck-Bremskraftverstärker mit einem Gehäuse bekannt, das durch einen Arbeitskolben und eine druckdichte Membran in eine Arbeitskammer und eine mit Unterdruck beaufschlagbare Unterdruckkammer unterteilt ist, wobei durch Betätigung des Arbeitskolbens mittels eines Bremspedals und einer Kolbenstange die im Ruhezustand mit Unterdruck beaufschlagte Arbeitskammer zur Erzeugung eines Überdrucks gegenüber der Unterdruckkammer belüftbar ist, wodurch eine Druckstange mit einer gegenüber der Pedalkraft verstärkten Druckkraft betätigbar ist, ist und in der Arbeitskammer eine durch einen elektrischen Steuerimpuls mittels eines Zünders zündbare Sprengladung angeordnet ist.

Aus der US 3,886,745 ist eine hydraulische Betätigungseinrichtung bekannt, die ein Gaserzeugungsmittel und einen ersten beweglichen Kolben aufweist, der mit einer Flüssigkeit in Kontakt steht und ein selbstabbrennendes Material und eine Zündeinrichtung in einer dem Kolben benachbarten Kammer aufweist. Durch die Zuführung eines Zündsignals an die Zündeinrichtung wird ein weiterer Betätigungszylinder mit einem weiteren verschiebbaren Kolben in einer gegenüberliegenden Kammer des ersten Kolbens durch eine dazwischenliegende Flüssigkeit betätigt, indem der von der Zündung des selbstabbrennenden Material erzeugt Gasdruck den ersten Kolben bewegt und durch die Flüssigkeit den weiteren Betätigungskolben betätigt

Aus der DE 196 01110 A1 ist eine hydraulische Kraftfahrzeugbremsanlage mit einer Betätigungseinheit bekannt, die mittels eines Bremspedals betätigbar ist. Um das insbesondere bei einem Auffahrunfall auftretende Verletzungsrisiko zu minimieren, werden in der Arbeitskammer des Bremskraftverstärkers ein Mittel angeordnet, die in einer Unfallsituation eine zusätzlich zum Atmosphärendruck wirksame Erhöhung des Druckes in der Arbeitskammer bewirken.

### Kern und Vorteile der Erfindung

Kern der vorliegenden Erfindung ist es, bei einer Fahrsituation, in der erkannt wurde, dass eine unausweichbare Kollision bevorsteht durch eine plötzliche und möglichst starke Fahrzeugverzögerung eine Notbremsung durchzuführen. Diese Notbremsung soll die Kollision vermeiden bzw. die Aufprallstärke des Fahrzeugs möglichst stark reduzieren. Hierfür werden teilweise irreversible Verzögerungsvorrichtungen beschrieben, durch die ein möglichst starkes Abbremsen des Fahrzeugs erreicht werden soll.

Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise ist zur Auslösung der plötzlichen Fahrzeugverzögerung bzw. der Notbremsung das Zünden eines Treibsatzes oder Sprengsatzes vorgesehen, wodurch sehr schnell große Energien freigesetzt werden können und eine starke Verzögerungswirkung erreicht werden kann. Die Verwendung von Treibsätzen oder Sprengsätzen in Gefahrensituationen ist beispielsweise durch die Verwendung von Airbags in Kraftfahrzeugen bekannt und hinreichend erprobt.

Vorteilhafterweise wird durch die Explosion des Treibsatzes oder Sprengsatzes ein Kolben bewegt, der die Bremsflüssigkeit mit einem Druck beaufschlagt. Durch die rasche Bewegung des Kolbens infolge der Treib-/Sprengsatzwirkung steht sehr schnelle ein hoher Bremsflüssigkeitsdruck zur Verfügung, der unabhängig von der Leistung einer eventuellen Bremsflüssigkeitspumpe ist.

Weiterhin ist es vorteilhaft, dass durch die Explosion eine Arretierungseinrichtung zerstört wird, so dass eine energiespeichernde Einrichtung die gespeicherte Energie sehr rasch freigeben kann und hierdurch ein hoher Anpressdruck der Bremskolben bzw. der Bremsbeläge an die Bremsscheiben erreicht wird.

Weiterhin ist es vorteilhaft, dass die energiespeichernde Einrichtung ein unter hohem Druck stehender Flüssigkeitsbehälter ist, der durch die Zerstörung der Arretierungseinrichtung einen Druckaufbau in der Bremsanlage bewirkt. Der unter hohem Druck stehende Bremsflüssigkeitsbehälter kann hierbei dauerhaft unter hohem Druck stehen, da die erfmdungsgemäße Funktion nur ein einzige Mal benötigt wird und danach eine Instandsetzung in einer Werkstätte nötig ist.

Weiterhin ist es jedoch auch möglich, den hohen Druck des zusätzlichen Bremsflüssigkeitsbehälters mittels einer Bremsflüssigkeitspumpe herzustellen, die beispielsweise nach Starten des Fahrzeugs den Druckspeicher auf den Betriebsdruck auflädt bzw. während dem Betrieb regelmäßig nachlädt, so dass der hohe Druck im Bedarfsfall rasch abgerufen werden kann.

Vorteilhafterweise weist die energiespeichernde Einrichtung eine vorgespannte Feder oder einen vorgespannten Kolben auf, die durch Entspannung einen Druckaufbau in der Bremsanlage bewirken. Hierbei kann die Feder beispielsweise als Spiralfeder oder als Paket aus mehreren Tellerfedern ausgeprägt sein.

Weiterhin ist es vorteilhaft, dass die Arretierungseinrichtung ein oder mehrere Haltebolzen oder ein Ventil ist, die bzw. das durch den Treibsatz oder den Sprengsatz gelöst bzw. zerstört werden können, wodurch die Arretierungsfunktion aufgehoben wird und die energiespeichernde Einrichtung ihre gespeicherte Energie für die Verzögerungswirkung freigeben kann.

Weiterhin ist es vorteilhaft, dass die mindestens eine Komponente der Verzögerungseinrichtungen, auf die der Treibsatz oder Sprengsatz wirkt, der Hauptbremszylinder ist. Diese Ausführung hat den Vorteil, dass der Hauptbremszylinder in jedem Fahrzeug bereits vorhanden ist und so ausgelegt ist, dass mittels des mit dem Hauptbremszylinder aufbaubaren Bremsdruckes eine zuverlässige Fahrzeugverzögerung erreicht werden kann. In der Ausführungsform, das die mindestens eine Komponente der Verzögerungseinrichtungen, auf die der Treibsatz oder Sprengsatz wirkt, der Hauptbremszylinder ist, ist eine besonders zu bevorzugende Ausführungsform, da diese Realisierung mit der kleinsten Anzahl an zusätzlich nötigen Teilen auskommt.

Weiterhin ist es vorteilhaft, dass die mindestens eine Komponente der Verzögerungseinrichtungen, auf die der Treibsatz oder Sprengsatz wirkt, ein zusätzlicher Bremszylinder ist. Dieser zusätzliche Bremszylinder speist im Bedarfsfall in das hydraulische Bremssystem den nötigen Druck ein und erfordert keine Umkonstruktion des bestehenden Hauptbremszylinders.

Weiterhin ist es vorteilhaft, dass die mindestens eine Komponente der Verzögerungseinrichtungen, auf die der Treibsatz oder Sprengsatz wirkt, eine Arretierungseinrichtung im Bremssattel ist, die bei der Explosion des Treibsatzes oder Sprengsatzes zusätzliche, vorgespannte Bremskolben freigibt, die auf die Bremsscheiben einwirken. In diesem Ausführungsbeispiel ist es nötig, in den Bremssätteln der Radbremsen zusätzliche Bremskolben vorzusehen, die im Falle einer Notbremsung durch eine Explosion des Treib-/Sprengsatzes freigegeben werden und damit unabhängig vom Hauptbremszylinder oder dem Hydrauliksystem der Bremsanlage unabhängig sind.

Weiterhin ist es vorteilhaft, dass die Zündung des Treibsatzes oder des Sprengsatzes mittels einer Umfeldsensorik ausgelöst wird, wenn aufgrund der Objekte im Umfeld des Fahrzeugs und deren Bewegung das Vorliegen einer unausweichbaren Kollision detektiert wird. Hierbei bietet es sich an, beispielsweise das erfindungsgemäße Verfahren sowie die erfindungsgemäße Vorrichtung der im Stand der Technik genannten Einrichtung zu verwenden, die den Treibsatz oder Sprengsatz zündet.

Weiterhin, ist es vorteilhaft, dass die Sensorik einen Radarsensor zur adaptiven Abstands-und Geschwindigkeitsmessung oder einen Videosensor oder einen Lasersensor oder einen Ultraschallsensor oder eine Kombination aus diesen Sensoren aufweist, mittels denen Objekte, die im Umfeld des Fahrzeugs detektiert werden können sowie deren Geschwindigkeit und Bewegungsrichtung erkannt werden kann.

Vorteilhafterweise ist es vorgesehen, dass nach Auslösung der plötzlichen Fahrzeugverzögerung der Druck des Bremssystems durch Öffnen von mindestens einem Ventil eines Antiblockiersystems der Druck im Bremssystem reduzierbar ist. Heutzutage ist jedes Neufahrzeug mittels eines Blockierschutzsystems oder Antiblockiersystems ausgerüstet, die bei Blockierneigung des Rades durch gezielt gesteuerte Ventilöffnungen den Druck des Bremssystems am jeweiligen Radzylinder absenken können, um eine Bodenhaftung des Fahrzeugrades zu gewährleisten. Weiterhin ist es auch möglich, durch gezielte Öffnung der Ventile des Antiblockiersystems einzelner Räder, das plötzlich und heftig verzögernde Fahrzeug in der Bewegungsrichtung zu beeinflussen oder so zu drehen, dass ein unausweichbarer Aufprall des Fahrzeugs derart geschieht, dass das Gefahrenrisiko für die Insassen minimiert wird.

Weiterhin ist es vorteilhaft, dass die Treib- oder Sprengsätze so angeordnet sind, dass durch deren Explosion mindestens ein Radlager des Fahrzeugs derart umgeformt wird, dass durch die gezielte Zerstörung des Radlagers eine Verzögerung entsteht, da ein Weiterdrehen der Fahrzeugachse im Radlager unterbunden wird.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: ein erstes Beispiel einen Vorrichtung bei dem der Treib-/Sprengsatz im Hauptbremszylinder angeordnet ist,
- Figur 2: eine weitere Beispiel einen Vorrichtung, in der ein weiterer Bremsflüssigkeitsbehälter mit Treib-/Sprengsatz vorgesehen ist,
- Figur 3: ein weiteres Beispiel einen Vorrichtung, bei dem ebenfalls ein weiterer Bremsflüssigkeitsbehälter vorgesehen ist,
- Figur 4: ein weiteres Beispiel einen Vorrichtung, das einen unter hohem Druck bestehenden, weiteren Bremsflüssigkeitsbehälter vorsieht,
- Figur 5: ein Ausführungsbeispiel der erfindungsgemäßen Vorrichtung, bei dem keine Einwirkung auf die Hydraulikkomponenten der Bremsanlage nötig ist und
- Figur 6: ein weiteres Ausführungsbeispiel der erfindungsgemäßen Vorrichtung.

### Beschreibung von Ausführungsbeispielen

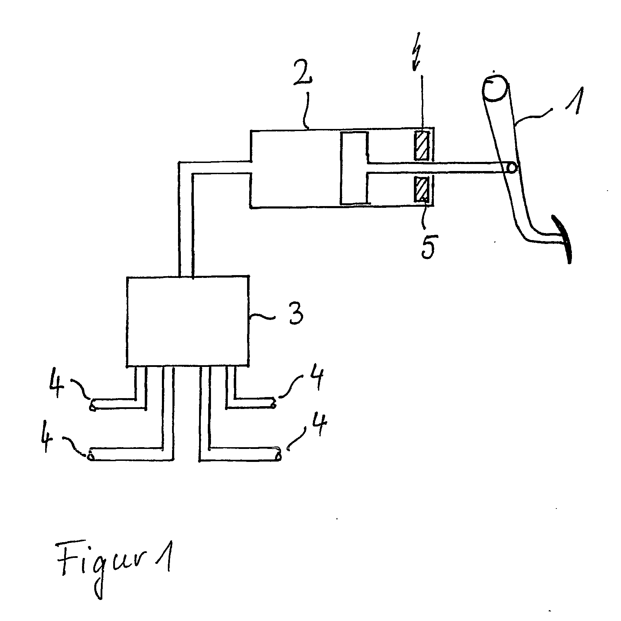

In Figur 1 ist ein Beispiel einen Vorrichtung dargestellt. Zu erkennen ist das Bremspedal 1, das bei Betätigung mittels eines Gestänges auf einen Kolben im Hauptbremszylinder 2 einwirkt. Hierbei wird im Hauptbremszylinder 2 die Bremsflüssigkeit mit Druck beaufschlagt, so dass der Bremsflüssigkeitsdruck über ein Leitungssystem an die hier nicht dargestellten Radkolben der Radbremsen weitergegeben werden kann, deren Zuleitungen 4 dargestellt sind. Weiterhin kann vorgesehen sein, dass ein Hydroaggregat 3 vorgesehen ist, wie es für die Verwendung von Antiblockiersystemen eingesetzt wird. Dieses Hydroaggregat 3 besteht im wesentlichen aus einem Speicher, einer Rückförderpumpe sowie mindestens einem Magnetventil. Solange die Fahrzeugräder keine Blockierneigung aufweisen, verhält sich dieses Hydroaggregat 3 passiv und lässt den Bremsdruck passieren. Lediglich im Falle der Blockierneigung einzelner oder mehrerer Räder greift das Hydroaggregat 3 in die Hydraulikanlage des Fahrzeugs ein und vermindert den Druck in einzelnen Zuleitungen 4 zu den Radzylindern der Bremsanlage. Wird mittels der Umfeldsensorik festgestellt, dass eine Kollision unausweichbar ist, so wird ein Treib- oder Sprengsatz 5 gezündet, der über eine Zündleitung (Blitz) ansteuerbar ist. Durch die Detonation des Treib- bzw. Sprengsatzes 5 wird im Hauptbremszylinder 2 der Hauptbremskolben gegen die Bremsflüssigkeit verschoben, wodurch ein plötzlicher Druckanstieg der Bremsflüssigkeit entsteht. Dieser Druckanstieg der Bremsflüssigkeit wird in die einzelnen Kanäle, sprich die Zuleitungen 4 zu den Radkolben der Bremsanlage weitergeleitet, wodurch eine plötzliche und scharfe Verzögerung erreicht wird.

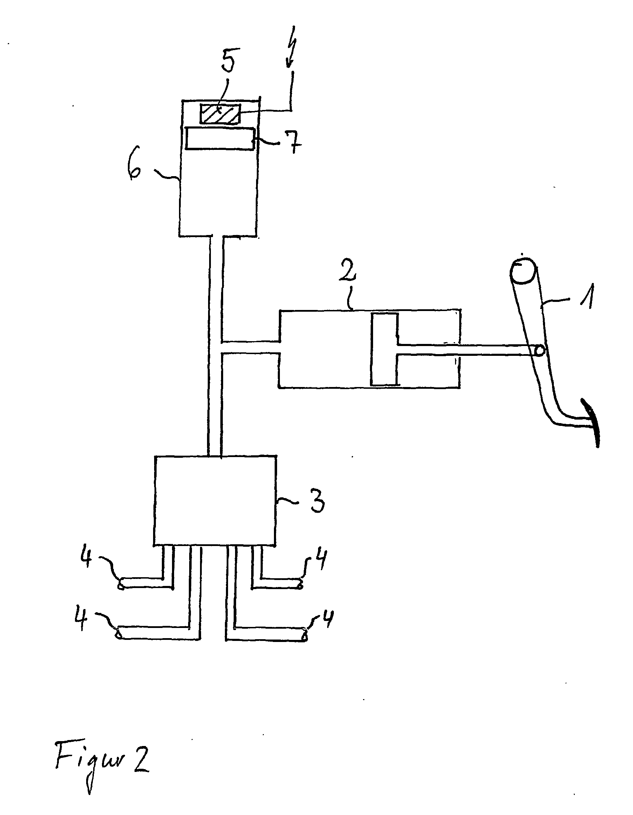

In Figur 2 ist ebenfalls eine schematische Bremsanlage dargestellt, die durch das Bremspedal 1 betätigt wird. Bei Betätigung des Bremspedals 1 wird über ein Gestänge ein Kolben im Hauptbremszylinder 2 verschoben, wodurch ein Bremsdruck aufgebaut wird. Dieser Bremsdruck wird über die Radkolbenzuleitungen 4, die über ein gegebenenfalls vorsehbares Hydroaggregat 3 geleitet werden an die Radbremsen weitergeleitet. Zusätzlich ist an die Leitung, die den Hauptbremszylinder 2 mit dem Hydroaggregat 3 verbindet, ein zusätzlicher Bremsflüssigkeitbehälter 6 vorgesehen, der einen Kolben 7 aufweist. Hinter dem Kolben 7, also auf der der Bremsflüssigkeit abgewandten Seite ist ein Treib-/Sprengsatz 5 vorgesehen, der über eine Zündleitung (Blitz) ansteuerbar ist. Wird das Vorliegen einer unausweichbaren Kollision detektiert, so wird durch die Umfelderfassungssensorik ein Zündsignal ausgegeben, das den Treib-/Sprengsatz 5 detonieren lässt, wodurch der Kolben 7 gegen die Bremsflüssigkeit im zusätzlichen Bremsflüssigkeitbehälter 6 verschoben wird. Hierdurch entsteht ein plötzlicher Bremsdruckanstieg, der über ein wahlweise vorgesehenes Hydroaggregat 3 auf die Zuleitungen 4 zu den Radkolben der Bremsen weitergeleitet wird. Bei dieser Ausführungsform kann es weiterhin vorteilhaft sein, am Ausgang des Hauptbremszylinders 2 ein Rückschlagventil vorzusehen, so dass infolge der Explosion des Treib-/Sprengsatzes 5, die den Bremsdruck schlagartig ansteigen lässt, der Kolben des Hauptbremszylinders 2 nicht zurückgedrückt wird und das Bremspedal nicht schlagartig in den Fußraum der Fahrgastzelle geschwenkt wird.

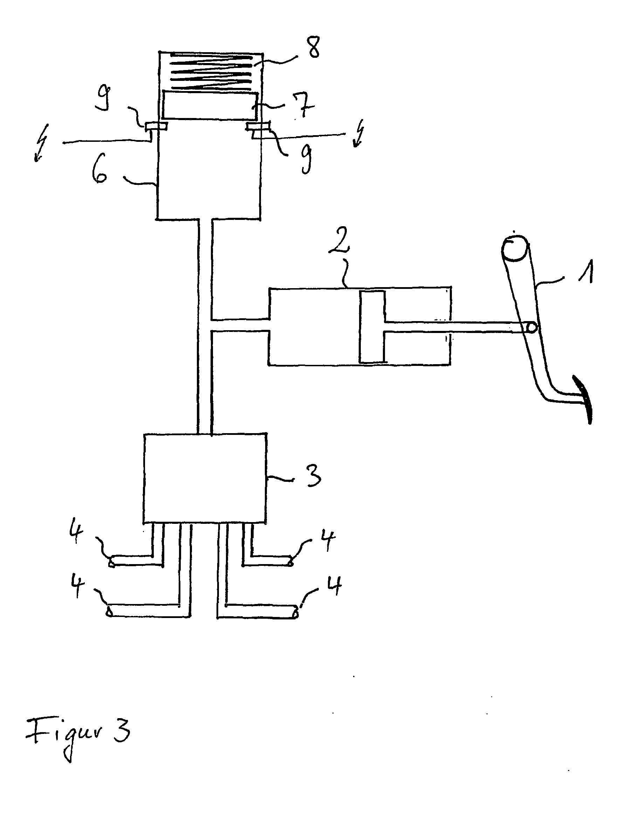

In Figur 3 ist ebenfalls eine Beispiel gezeigt, die der Vorrichtung nach Figur 2 weitestgehend entspricht. Zu erkennen ist wiederum das Bremspedal 1, das über ein Gestänge mit dem Hauptbremszylinder 2 verbunden ist. Durch eine Betätigung des Bremspedals 1 kann im Hauptbremszylinder 2 ein Bremsdruckaufbau stattfinden, der über eine Zuleitung und ein wahlweise vorgesehenes Hydroaggregat 3 den Bremsdruck auf Zuleitungen 4 an die Radkolben der Bremsanlage weiterleitet. An der Leitung, die den Hauptbremszylinder 2 mit dem Hydroaggregat 3 verbindet, ist wiederum ein zusätzlicher Bremsflüssigkeitbehälter 6 vorgesehen. Dieser zusätzliche Bremsflüssigkeitbehälter 6 weist einen Kolben 7 auf, der auf der Bremsflüssigkeit abgewandten Seite, also anstelle des Treib-/Sprengsatzes in Figur 2 ein Spannelement 8 aufweist. Dieses Spannelement 8 kann beispielsweise in Form einer Spiralfeder oder eines Pakets mehrerer aufeinandergelegter Tellerfedern ausgeprägt sein, es eignen sich jedoch auch andere energiespeichernde, mechanische Vorrichtungen. Dieses Spannelement ist vorgespannt, so dass der Kolben 7 unter Druck steht. Um ein Entspannen des Spannelements 8 zu verhindern, sind weiterhin Haltebolzen 9 vorgesehen, die ein Verschieben des Kolbens 7 infolge der Krafteinwirkung des Spannelements 8 gegen die Bremsflüssigkeit des zusätzlichen Bremsflüssigkeitbehälters 6 verhindern. Im Fall, dass die Umfeldsensorik eine Fahrsituation erkannt hat, in der eine Kollision unmittelbar bevorsteht, wird mittels der Zündleitungen (Blitz) mindestens ein Treib-/Sprengsatz gezündet, der als Teil der Haltebolzen 9 ausgebildet sein kann. Hierdurch werden die Haltebolzen 9 zerstört oder gelöst, wodurch das Spannelement 8 den Kolben 7 entgegen der Bremsflüssigkeit verschieben kann. Hierdurch entsteht ein Bremsflüssigkeitsdruck, der über das Hydroaggregat 3 an die Zuleitungen 4 zu den Radkolben weitergeleitet wird. Auch in diesem Ausführungsbeispiel kann am Ausgang des Hauptbremszylinders 2 ein Rückschlagventil vorgesehen sein, um in Falle des Auslösens der beschriebenen Vorrichtung eine heftige Bewegung des Bremspedals 1 im Fußraum der Fahrgastzelle zu unterbinden.

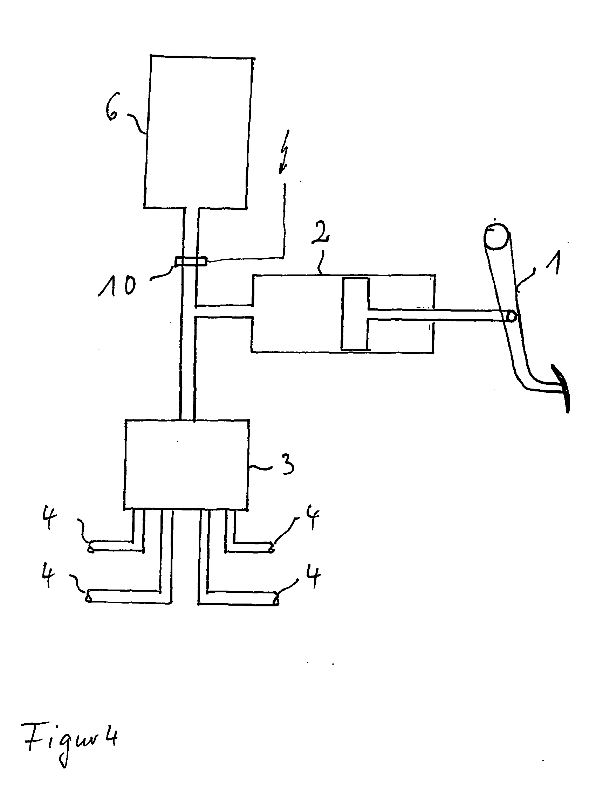

In Figur 4 ist wiederum ein Bremspedal 1 abgebildet, dass über ein Gestänge mit einem Hauptbremszylinder 2 verbunden ist. Bei Betätigung des Bremspedals 1 wird der Kolben im Hauptbremszylinder 2 verschoben, wodurch ein Bremsdruck aufgebaut wird, der über ein wahlweise vorgesehenes Hydroaggregat 3 einer Antiblockiereinrichtung an die Zuleitungen 4 zu den Radkolben der Bremsanlage weitergeleitet wird. Auch in diesem Ausführungsbeispiel ist an die Leitung zwischen dem Hauptbremszylinder 2 und dem Hydroaggregat 3 ein Anschluss an einen anderen weiteren Bremsflüssigkeitsbehälter 6 vorgesehen. Dieser Bremsflüssigkeitsbehälter steht unter hohem Druck und ist durch den Druckverschluss 10 druckdicht verschlossen. Im Falle der Notbremsanforderung, die über eine Zündleitung (Blitz) angefordert wird, wird der Druckverschluss 10 mittels eines Treib-/Sprengsatzes geöffnet, wodurch der Druck im zusätzlichen Druckbehälter 6 entweichen kann und die Hydraulikanlage der Bremsvorrichtung mit Druck beaufschlagt.

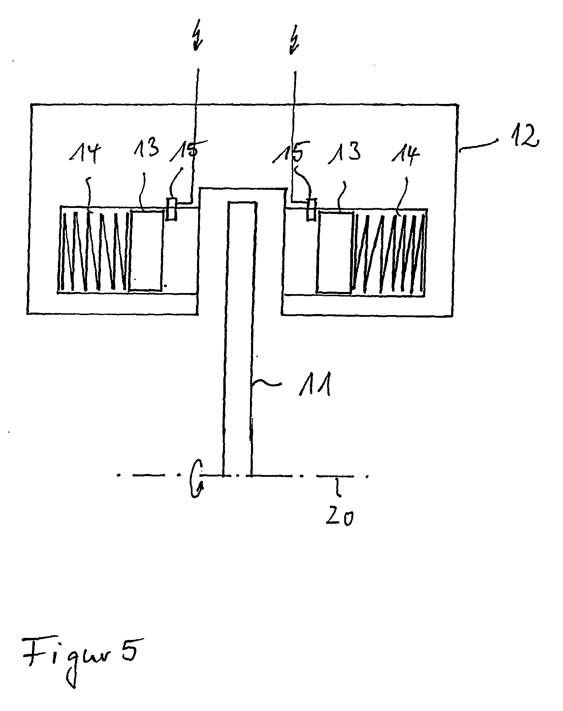

In Figur 5 ist erfindungsgemäß eine Vorrichtung dargestellt, die jedoch nicht auf die hydraulischen Bremskomponenten einwirkt sondern direkt an den Radbremsen angreift. Zu erkennen ist ein Teil einer schematisch dargestellten Bremsscheibe 11, die im Fahrbetrieb um die Drehachse 20 rotiert. Weiterhin ist ein Bremssattel 12 dargestellt, der neben den hydraulisch ansteuerbaren Bremsklötzen und Bremsbelägen, mit denen im normalen Fahrbetrieb verzögert wird, zusätzliche Bremskolben 13 aufweist. Diese zusätzlichen Bremskolben, die selbstverständlich mit Bremsbelägen ausgestattet sein können, sind mittels Spannelementen 14, vorteilhafter Weise in Form von Spiralfedern oder Tellerfedern vorgespannt und mittels Haltebolzen 15 arretiert. Durch die Vorspannung der Spannelemente 14 werden die zusätzlichen Bremskolben 13 in Richtung Bremsscheibe gedrückt, was jedoch durch die Haltebolzen 15 verhindert wird. Im Fall einer vorliegenden Kollisionssituation, in der eine Notbremsung angefordert wird, wird über die Zündleitungen (Blitz) ein Zündsignal abgegeben, wodurch die Treib-/Sprengsätze, die als Teil der Haltebolzen 15 ausgebildet sind, gezündet werden. Hierdurch werden die Haltebolzen 15 zerstört bzw. gelöst, so dass die Spannelemente 14, die Bremskolben 13 gegen die Bremsscheibe drücken, wodurch eine starke Verzögerungswirkung einsetzt.

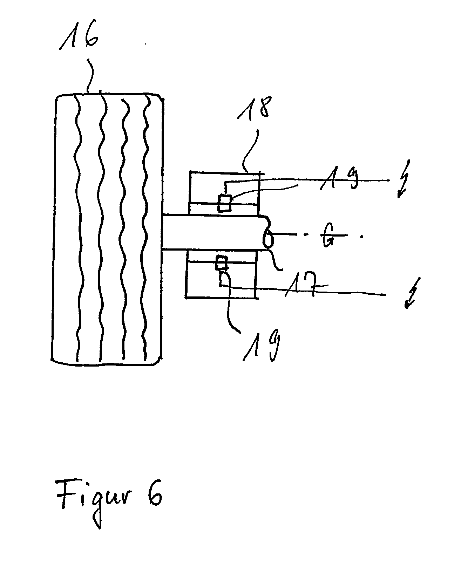

In Figur 6 ist ein weiteres Ausführungsbeispiel dargestellt, bei dem die Verzögerungswirkung ohne Einfluss auf die hydraulischen Bremskomponenten stattfindet. Zu erkennen ist ein Fahrzeugreifen 16, der eine Radachse 17 aufweist, um die sich das Rad 16 dreht. Die Radachse 17 ist in einem Radlager 18 gelagert, wodurch das Rad 16 geführt wird. Im Radlager 18 sind Treibsätze oder Sprengsätze 19 vorgesehen, die im Falle einer unausweichbaren Kollision des Fahrzeugs zündbar sind. Hierzu wird über Zündleitungen ein Zündsignal (Blitz) erzeugt, das die Treib-/Sprengsätze 19 zündet, wodurch die Radlager 18 zerstört werden. Im normalen Betrieb haben die Radlager eine sehr geringe Rotationsreibung, so dass das Fahrzeug nur wenig Energie infolge der Raddrehungen verliert. Durch die Zerstörung der Radlager 18 infolge der Einwirkung der Treib-/Sprengsätze 19 wird die Rotationsreibung des Radlagers 18 enorm erhöht oder ein Drehen der Radachse 17 im Radlager 18 vollständig unterbunden. Hierdurch erreicht man eine starke Verzögerungswirkung des Fahrzeugrads 16, wodurch eine möglichst große, kinetische Energie vor dem Aufprall in Radreibung umgesetzt werden kann.

## Patentansprüche

1. Vorrichtung zur Einleitung und Durchführung einer plötzlichen Fahrzeugverzögerung, insbesondere für Notbremssituationen, wobei die Verzögerung durch die Explosion mindestens eines Treibsatzes oder Sprengsatzes, der auf mindestens eine Komponente der Verzögerungseinrichtungen wirkt, eingeleitet wird, **dadurch gekennzeichnet, dass** die mindestens eine Komponente der Verzögerungseinrichtungen, auf die der Treibsatz oder Sprengsatz wirkt, eine Arretierungseinrichtung im Bremssattel (12) ist, die bei der Explosion des Treibsatzes oder Sprengsatzes vorgespannte, zusätzliche Bremskolben (13) freigibt, die auf die Bremsscheiben (11) einwirken.

2. Vorrichtung nach Anspruch 1, **dadurch gekennzeichnet, dass** durch die Explosion des Treibsatzes oder Sprengsatzes ein, die Bremsflüssigkeit mit einem Druck beaufschlagender Kolben bewegt wird.

3. Vorrichtung nach Anspruch 1, **dadurch gekennzeichnet, dass** durch die Explosion eine Arretierungseinrichtung zerstört wird, so dass die gespeicherte Energie einer energiespeichernden Einrichtung freigegeben wird.

4. Vorrichtung nach Anspruch 3, **dadurch gekennzeichnet, dass** die energiespeichernde Einrichtung ein unter hohem Druck stehender Bremsflüssigkeitsbehälter ist, der durch die Zerstörung der Arretierungseinrichtung einen Druckaufbau in der Bremsanlage bewirkt.

5. Vorrichtung nach Anspruch 3, **dadurch gekennzeichnet, dass** die energiespeichernde Einrichtung eine vorgespannte Feder und/ oder ein vorgespannter Kolben ist, die durch Entspannung einen Druckaufbau in der Bremsanlage bewirken.

6. Vorrichtung nach einem der vorhergehenden Ansprüche, **dadurch gekennzeichnet, dass** die Arretierungseinrichtung ein Haltebolzen oder ein Ventil ist.

7. Vorrichtung nach einem der vorhergehenden Ansprüche, **dadurch gekennzeichnet, dass** die mindestens eine Komponente der Verzögerungseinrichtungen, auf die der Treibsatz oder Sprengsatz wirkt der Hauptbremszylinder ist.

8. Vorrichtung nach einem der vorhergehenden Ansprüche, **dadurch gekennzeichnet, dass** die mindestens eine Komponente der Verzögerungseinrichtungen, auf die der Treibsatz oder Sprengsatz wirkt ein zusätzlicher Bremszylinder ist

9. Vorrichtung nach einem der vorhergehenden Ansprüche, **dadurch gekennzeichnet, dass** die Zündung des Treibsatzes oder des Sprengsatzes mittels einer Umfeldsensorik ausgelöst wird, wenn aufgrund der Objekte im Umfeld des Fahrzeugs und deren Bewegung das Vorliegen einer unausweichbaren Kollision detektiert wird.

10. Vorrichtung nach Anspruch 9, **dadurch gekennzeichnet, dass** die Sensorik einen Radarsensor zur adaptiven Abstands- und Geschwindigkeitsmessung oder einen Videosensor oder einen Lasersensor oder einen Ultraschallsensor oder eine Kombination hieraus aufweist

11. Vorrichtung nach einem der vorhergehenden Ansprüche, **dadurch gekennzeichnet, dass** nach Auslösung der plötzlichen Fahrzeugverzögerung der Druck des Bremssystems durch Öffnen von mindestens einem Ventil eines Antiblockiersystems der Druck im Bremssystem reduzierbar ist.

12. Vorrichtung zur Einleitung und Durchführung einer plötzlichen Fahrzeugverzögerung, insbesondere für Notbremssituationen gemäß dem Oberbegriff des Anspruchs 1, **dadurch gekennzeichnet, dass** die Verzögerung durch die Explosion mindestens eines Treibsatzes oder Sprengsatzes, der auf mindestens ein Radlager wirkt, eingeleitet wird und durch die Zerstörung des Radlagers die gewünschte Verzögerungswirkung entsteht.

## Claims

1. Apparatus for initiating and executing a sudden vehicle deceleration, in particular for emergency braking situations, the deceleration being initiated due to the explosion of at least one propellant charge or explosive charge which acts on at least one component of the deceleration devices, **characterized in that** the at least one component of the deceleration devices on which the propellant charge or explosive charge acts is a retention device which is located in the brake calliper (12) and which, upon the explosion of the propellant charge or explosive charge, releases prestressed additional brake pistons (13) which act on the brake discs (11).

2. Apparatus according to Claim 1, **characterized in that**, as a result of the explosion of the propellant charge or explosive charge, a piston acting with a pressure upon the brake fluid is moved.

3. Apparatus according to Claim 1, **characterized in that**, as a result of the explosion, a retention device is destroyed, so that the stored energy of an energy-storing device is released.

4. Apparatus according to Claim 3, **characterized in that** the energy-storing device is a brake-fluid reservoir which is under high pressure and which causes a pressure build-up in the brake system as a result of the destruction of the retention device.

5. Apparatus according to Claim 3, **characterized in that** the energy-storing device is a prestressed spring and/or a prestressed piston which cause/causes a pressure build-up in the brake system as a result of relaxation.

6. Apparatus according to one of the preceding claims, **characterized in that** the retention device is a holding bolt or a valve.

7. Apparatus according to one of the preceding claims, **characterized in that** the at least one component of the deceleration devices on which the propellant charge or explosive charge acts is the brake master cylinder.

8. Apparatus according to one of the preceding claims, **characterized in that** the at least one component of the deceleration devices on which the propellant charge or explosive charge acts is an additional brake cylinder.

9. Apparatus according to one of the preceding claims, **characterized in that** the ignition of the propellant charge or of the explosive charge is triggered by means of surrounding-area sensors when the presence of an unavoidable collision is detected on account of the objects in the surrounding area of the vehicle and their movement.

10. Apparatus according to Claim 9, **characterized in that** the sensors have a radar sensor for adaptive distance and speed measurement or a video sensor or a laser sensor or an ultrasonic sensor or a combination of these.

11. Apparatus according to one of the preceding claims, **characterized in that**, after the sudden vehicle deceleration is triggered, the pressure of the brake system can be reduced by the opening of at least one valve of an anti-lock system.

12. Apparatus for initiating and executing a sudden vehicle deceleration, in particular for emergency braking situations, according to the precharacterizing clause of Claim 1, **characterized in that** the deceleration is initiated due to the explosion of at least one propellant charge or explosive charge which acts on at least one wheel bearing, and the desired deceleration action occurs due to the destruction of the wheel bearing.

## Revendications

1. Dispositif pour induire et mettre en oeuvre un ralentissement de véhicule subit, notamment dans des situations de freinage d'urgence, dans lequel le ralentissement est induit par l'explosion d'au moins un bloc de poudre ou une charge d'explosif , qui agit sur au moins un composant des dispositifs de ralentissement, **caractérisé en ce qu'**au moins un composant des dispositifs de ralentissement, sur lequel le bloc de poudre ou la charge d'explosif agit, est un dispositif d'arrêt dans l'étrier de frein (12), qui libère lors de l'explosion du bloc de poudre ou de la charge d'explosif des pistons de freinage (13) précontraints, supplémentaires, qui agissent sur les disques de freins (11).

2. Dispositif selon la revendication 1, **caractérisé en ce que** du fait de l'explosion du bloc de poudre ou de la charge d'explosif, un piston sollicitant le liquide de freins avec une pression est déplacé.

3. Dispositif selon la revendication 1, **caractérisé en ce que** du fait de l'explosion, un dispositif d'arrêt est détruit, de telle sorte que l'énergie accumulée d'un dispositif d'accumulation d'énergie soit libérée.

4. Dispositif selon la revendication 3, **caractérisé en ce que** le dispositif d'accumulation d'énergie est un récipient de liquide de freins soumis à une pression élevée, qui provoque du fait de la destruction du dispositif d'arrêt une montée de la pression dans l'installation de freinage.

5. Dispositif selon la revendication 3, **caractérisé en ce que** le dispositif d'accumulation d'énergie est un ressort précontraint et/ou un piston précontraint, qui provoquent du fait de la détente une montée de la pression dans l'installation de freinage.

6. Dispositif selon une des revendications précédentes, **caractérisé en ce que** le dispositif d'arrêt est un boulon de retenue ou une soupape.

7. Dispositif selon une des revendications précédentes, **caractérisé en ce qu'**au moins un composant des dispositifs de ralentissement, sur lequel le bloc de poudre ou la charge d'explosif agit, est le cylindre de freinage principal.

8. Dispositif selon une des revendications précédentes, **caractérisé en ce qu'**au moins un composant des dispositifs de ralentissement, sur lequel le bloc de poudre ou la charge d'explosif agit, est un cylindre de freinage supplémentaire.

9. Dispositif selon une des revendications précédentes, **caractérisé en ce que** l'allumage du bloc de poudre ou de la charge d'explosif est déclenché au moyen d'un système de capteurs d'environnement, quand en raison des objets dans l'environnement du véhicule et de leur mouvement, la présence d'une collision inévitable est détectée.

10. Dispositif selon la revendication 9, **caractérisé en ce que** le système de capteurs présente un capteur de radar pour la mesure de vitesse et de distance adaptative ou un capteur vidéo ou un capteur laser ou un capteur d'ultrasons ou une combinaison de ceux-ci.

11. Dispositif selon une des revendications précédentes, **caractérisé en ce qu'**après le déclenchement du ralentissement de véhicule subit, la pression du système de freinage peut être réduite par l'ouverture d'au moins une soupape d'un système antiblocage de la pression dans le système de freinage.

12. Dispositif pour induire et mettre en oeuvre un ralentissement de véhicule subit, notamment dans des situations de freinage d'urgence conformément au préambule de la revendication 1, **caractérisé en ce que** le ralentissement est induit par l'explosion d'au moins un bloc de poudre ou une charge d'explosif, qui agit sur au moins un roulement de roue, et génère du fait du ralentissement du roulement de roue l'effet de ralentissement souhaité.
